# EUROPEAN PATENT APPLICATION

(11) **EP 4 428 836 A1**
(43) Date of publication of application: **11.09.2024**
(21) Application number: 23305325.5
(22) Date of filing: 10.03.2023
(51) Int. Cl.: G06V 20/62, G06V 10/44, G06V 10/82, G06V 30/10, G06V 10/774

(54) **CURATING ANNOTATED IMAGES**

(71) Applicant: Koninklijke Philips N.V., 5656 AG Eindhoven (NL)
(72) Inventor: OLIVIER, Antoine, 5656 EINDHOVEN (NL); RAYNAUD, Caroline, 5656 EINDHOVEN (NL); ORASANU, Eliza, 5656 EINDHOVEN (NL); LORENZ, Cristian, 5656 EINDHOVEN (NL); SCHMIDT-RICHBERG, Alexander, 5656 EINDHOVEN (NL); CIOFOLO-VEIT, Cybele, 5656 EINDHOVEN (NL); FRANZ, Astrid, 5656 EINDHOVEN (NL)
(74) Representative: Philips Intellectual Property & Standards

(57) **Abstract**

A computer-implemented method and system for curating annotated images (101), the method comprising the following steps: receiving an annotated image (101) having at least one annotation; applying a trained neural network (211) to the annotated image (101) and thereby generating an amended image (102) without the at least one annotation; providing the amended image (102).

## Description

### FIELD OF THE INVENTION

The invention relates to a computer-implemented method for curating annotated images, a corresponding computer program, a method for training a neural network, and a data processing system.

### BACKGROUND OF THE INVENTION

In clinical practice, it is quite common to export medical images with annotations being inscribed in the respective medical image. Annotations may comprise textual markers and non-textual markers, such as lines, scales, calipers, position markings, notes, text reporting results of performed measurements etc. It is common practice to save these images only with these annotations, thereby discarding the original image. This reduces complexity and saves costs, e.g., by reducing data storage space.

While availability of images without annotations may not be necessary in many situations of day-to-day clinical practice, having access to the original images, i.e., images without annotations, can be highly important for researchers. For example, image data are needed for developing algorithms, such as machine learning algorithms, which automatically take measurements on the images and thus assist in diagnosis. Often, such algorithms are trained to correctly position certain marker or scales in order to perform the measurements. For developing algorithms, it is often crucial to have large amounts of training data, e.g., image data with and without annotations. Additionally, it is important to have access to image data without annotations, since annotations inscribed on the image data used for training may carry a risk of introducing a bias when developing new features or algorithms. On the other hand, it may also be desirable to still be able to use the annotations for developing the algorithms. For example, when an algorithm is to be trained to automatically create annotations, such as making measurements and applying corresponding notes or markings, the annotations may be used as training reference.

Accordingly, since a large quantity of annotated images is available from clinical institutions, it would be beneficial if these annotated images could be curated to be suitable for developing algorithms.

The United States Patent US 10 496 884 B1 describes a method for transforming image data and training or testing neural networks. Therein, it is proposed to digitize annotations from annotated images by a computer and then remove the annotations from the image. However, the disclosure in this document does not give any detail, how digitizing of annotations and removing of annotations may be accomplished.

### OBJECT OF THE INVENTION

It is, therefore, an object of the invention to provide a method to better address the above-mentioned problems in order to better enable using annotated image data for developing algorithms such as machine learning algorithms. Furthermore, it would be desirable to find a solution that also enables using the annotations of annotated images for algorithm development.

### SUMMARY OF THE INVENTION

To better address this object, a method according to claim 1, a computer program according to claim 11, a method according to claim 12 and a data processing system according to claim 14 is provided. Advantageous embodiments are set out in the dependent claims. Any features, advantages or alternative embodiments described herein in relation to the claimed method are also applicable to the other claim categories and vice versa.

According to a first aspect, a computer-implemented method for curating annotated images is provided. The method comprises the following steps:
(a) receiving an annotated image having at least one annotation;
(b) applying a trained neural network to the annotated image and thereby generating an amended image without the at least one annotation;
(c) providing the amended image.

In the context of this invention, the term "curating annotated images" may preferably mean editing or modifying the images, in particular preparing the images for further use by amending the images. The images may be medical images. The medical images may be received from a clinical institution and/or clinical data base, e.g., originating from clinical practice. Since there are often large amounts of annotated medical images and there tends to be a large demand for medical training data in order to train medical analysis algorithms, curating annotated medical images may be particularly beneficial. However, in principle, this method may also be applied to other types of annotated images. The annotated image may have only one annotation or multiple annotations. The at least one annotation may, for example, comprise text, such as notes or written measurement results, a line, e.g., a dotted line or a continuous line, a cross-like marking, a caliper, a position marking and/or a scale marking.

Applying the neural network may in particular mean feeding the annotated image into an input layer of the neural network, wherein the neural network generates the amended image as output. The trained neural network is in particular trained to remove at least one annotation from an annotated image by generating an image without the at least one annotation. Preferably, the amended image essentially corresponds to the annotated image. The amended image may preferably be essentially equal to the annotated image but missing the at least one annotation. "Essentially" may be understood such that small differences that may arise due to artifacts caused by the image generating process may potentially still be present. Depending on how well the neural network is trained these differences may be minimal or even non-existent. Preferably, the neural network may be trained to remove the at least one annotation at pixel level. The neural network may preferably be trained to generate the amended image such that there are no visible remains of the at least one annotation. Optionally, the neural network may be trained to only remove the at least one annotation and not remove other annotations. I.e., according to one embodiment, the neural network may be trained not to remove all annotations. For example, an index number marking the image may be left on the image.

Advantageously, the method provides a way of automatically cleaning image data by removing the at least one annotation. In particular the annotation may be removed at pixel level by this method. It has been found that the application of the neural network can provide a particularly reliable and inexpensive way of removing the at least one annotation. For example, a manual removal would be time-consuming and costly. On the other hand, an automated removal via an alternative method is less reliable or less accurate.

According to an embodiment, the annotated image is an annotated 2D medical image or a 2D slice extracted from a 3D medical image. The annotated image may be part of a video stream or extracted from a video stream, e.g., as a screenshot and/or using a frame-grabbing device. The medical image may be an ultrasound image, in particular an ultrasound B-mode image. It has been found that this method may work particularly well with ultrasound B-mode images of a foetal exam. However, the method may also be used with other ultrasound images, such as cardiac ultrasound imaging for cardiac exams, or other imaging modes, such as X-ray images, MR images or CT images. For example, the annotated image may be a slice extracted from MR or CT volumes.

According to an embodiment, the at least one annotation comprises at least one textual and/or at least one non-textual marker. The at least one textual marker may comprise a note and/or text reporting a measurement. The text may comprise numbers and/or letters, preferably both, e.g., to indicate a measurement value and its unit. The at least one non-textual maker may, for example, comprise a line, a combination of lines, or a geometric form. The line may for example be dotted or continuous. The line may be straight or curved. The line may mark a diameter or a radius or a circumference of an object, e.g., the circumference of an organ. A combination of lines may, for example, comprise a cross-like structure, e.g., a cross-like marking such as a cross-like caliper, a line between two crosses, or a scale marking. The scale marking may, for example, indicate a scale, in particular a geometrical size, of the image. The caliper may, for example, indicate a place and/or distance of measurement. A geometric form may, for example, be an ellipse, a circle, a rectangle, a square, etc. Alternatively or additionally, the non-textual marking may for example be a position marking. Several textual and/or non-textual markers may be combined into one annotation or constitute several annotations on the annotated image. According to an embodiment, the at least one annotation includes measurement data which have been obtained by measurements on the annotated image, in particular manual measurements by a user. The user may, for example, be a medical professional, such as a physician or an imaging technician of a medical institution.

According to an embodiment, the trained neural network is a convolutional neural network trained in a fully supervised fashion, in particular a U-Net based convolutional network. The convolutional neural network may comprise several convolutional layers followed by a pooling layer. The convolutional neural network may comprise an activation function, in particular a rectifier, also specified as ReLU (rectified linear unit). The convolutional neural network is in particular trained in a fully supervised fashion by providing training data comprising pairs of training images. The pairs may each consist of an annotated image with at least one annotation as training input and the corresponding image without the at least one annotation as training reference. A convolutional neural network may advantageously allow accurate predictions of the amended image while requiring relatively few training data. It has been found that a U-Net based neural network can advantageously allow particularly accurate results while requiring relatively low training times and little training data. The U-Net comprises in particular a contracting part having several downsampling steps and, following this, an expanding part having several upsampling steps. The contracting part may be formed by a backbone, i.e. another neural network, in particular a fully convolutional neural network. The backbone may be pre-trained, in order to detect image features better, for example on training data from ImageNet (www.image-net.org), which is an image database organized according to the WordNet hierarchy, in which each node of the hierarchy is depicted by hundreds or thousands of images.

The U-Net may for example comprise repeated sequences of two 3×3 convolutions, followed by a ReLU and a 2×2 max pooling operation. In an example, the neural network may comprise 15 to 30 convolutional layers. The U-Net may be configured based on a state-of-the-art U-Net architechture, e.g., as described in Ronneberger et al., "U-Net: Convolutional Networks for Biomedical Image Segmentation" arxiv:1505.04597v1, 18 May 2015.

According to an alternative embodiment, the trained neural network is trained based on Generative Adversarial Networks, preferably cycle-consistent Generative Adversarial Networks (cycleGANs). This embodiment may be particularly useful, if, for training the neural network, there are no paired annotated and unannotated images available. Cycle consistent in particular means that the trained neural may be trained such that the generated amended image without the annotation is processed again via a second neural network such that the output again contains the annotation. I.e., the trained neural network may be optimised to be consistent in generating unannotated images that appear to be equal to images that have not been annotated in the first place. The trained neural network may be analogous to cycleGANs known in the state of the art, e.g., from Zhu et al., "Unpaired Image-to-Image Translation using Cycle-Consistent Adversarial Networks", arXiv: 1703.10593v7, 24 Aug 2022.

According to an embodiment, the method further comprises the following step:
(d) extracting the at least one annotation from the annotated image to create at least one extracted annotation. The step of extracting the at least one annotation may be carried out before, after or during the step of providing the amended image. It may be advantageous to carry out the step of extracting the at least one annotation before the step of providing the amended image. The at least one extracted annotation may be provided together with the amended image. The at least one extracted annotation may comprise information contained in the at least one annotation. Optionally the extracted annotation may comprise information about the position and/or orientation of the at least one annotation on the annotated image. Additionally or alternatively, the extracted annotation may comprise information about the geometrical form of the at least one annotation. The information may, for example, include values of biometrical measurements and/or a caliper position. For example, the extracted annotation may comprise information about the position of a geometrical annotation, such as a circle, an ellipse a square, or a rectangle. Information about the geometrical form may comprise a set of parameters that define the geometrical annotation. In the example of an ellipse, the set of parameters that define the geometrical annotation may, for example, comprise as a small axis, a large axis, a centre and an angle of the ellipse. Alternatively the information may comprise a number of points on the geometrical annotation that allow to reconstruct the geometrical annotation. Advantageously, this embodiment may provide that information contained in the at least one annotation is not lost. Hence, the extracted annotation may be used later, e.g., for algorithm development and/or providing the extracted annotation to a data base. The extracted annotation may be converted into a standard format of annotations. A standard format may be standard with respect to a chosen standard language and/or at least one applied standard unit. The standard format may comprise a standard coordinate system defining the position of the at least one annotation on the annotated image. The standard format may comprise standard geometric definitions defining a geometric form and/or orientation on the annotated image of the extracted annotation. The standard format may comprise an order of listing information, such as measurement results. Different annotation formats, for example, different languages or different caliper formats, may be unified to allow easier processing of the extracted annotations and/or to allow providing a unified set of training data for the development of algorithms. It may be provided that, for extracting the annotation, a look-up table is used. The look-up table may contain information about usual annotation formats. The extracted annotation may be categorized according to the look-up table. The look-up table may contain usual text phrases. The look-up table may contain usual units used for describing measurement parameters and/or measurement results. Alternatively, a trained neural network may be used to convert the at least one annotation into a standard format.

According to an embodiment, extracting the at least one annotation comprises subtracting the amended image from the annotated image, the at least one extracted annotation being derived from the difference. The difference may in particular be a subtracted image that is the result of subtracting the amended image from the annotated image. Subtracting may in particular be carried out at pixel level. I.e., each pixel of the amended image may be subtracted from the corresponding pixel of the annotated image. A corresponding pixel is preferably the pixel being at the same position at the annotated as the other corresponding pixel is at the amended image. Advantageously, the amended image can thus be used to allow an easy extraction of the at least one annotation. In a simple implementation of this embodiment, the difference may be directly used to be the at least one extracted annotation. Optionally, a filter (e.g., low-pass filter) or a thresholding step may be applied to the subtracted image to suppress noise. Optionally, a matching step may be applied after subtracting in order to search and identify the annotation. The matching step may comprise applying a template that is configured to search for at least one predefined type of annotations. For example, in the case of cross-like annotations, a template searching for crosses may be applied in order to recognize the annotation after subtracting the images. The template may be more complex, e.g., configured to search for various types of annotations.

According to an embodiment, extracting the at least one annotation comprises applying an optical character recognition (OCR) algorithm to convert textual markers from the annotated image into a text item in a structured text format. The OCR algorithm may be applied to the subtracted image, after subtracting the amended image from the annotated image. Advantageously the OCR may be more reliable, when the subtracted image can provide a cleaner representation of the textual markers. Alternatively, the OCR algorithm may be applied directly on the annotated image. This may be a simpler implementation of the extraction of textual markers. According to a specific embodiment, the subtracting of the amended image from the annotated image is used to extract non-textual markers, while the OCR algorithm is used to extract textual markers. Advantageously, the textual markers from the annotations may be extracted such that that they can be processed further, e.g., in a digitized form. The optical character recognition algorithm may be configured to recognize patterns in images via a neural network. The patterns may in particular correspond to text patterns, such as comprising letters and numbers. An OCR algorithm as known from the state of the art may be implemented. An example of an algorithm that may be applied is "tesseract" which may be found at the internet address https://github.com/tesseract-ocr/tesseract.

According to an embodiment, converting the textual markers comprises assessing the textual information contained in the textual marker, wherein the structured text format is a predefined standard format for representing the textual information. Optionally, the text recognition algorithm may be configured to recognize text in a plurality of different languages. Thus, the method may provide converting the textual marker into a (predefined) standard format for representing the textual information. This may be advantageous, since annotations on the annotated image may be in a non-standard format. E.g., clinical guidelines according to which annotations are applied may vary. Accordingly, different annotated images may each have annotations in different formats. Therefore, it may be advantageously to enable a unification of different formats of annotations via this method. Furthermore, the language of the textual markers may vary for different annotated images. Accordingly, the standard format may comprise a standard language into which the textual markers are converted. Advantageously, applying a text recognition algorithm that recognizes a plurality of different languages may be beneficial to allow converting the textual markers into a defined standard language, such as English.

According to an embodiment, the method further comprises the following step:
(e) Adding the amended image, optionally together with the at least one extracted annotation, to a database of training data. Advantageously, with this embodiment, a database of training data, e.g., for developing algorithms, may be build up automatically. Each amended image may be added together with the corresponding at least one extracted annotation such that a training pair for training an algorithm is generated.

According to another aspect, a computer program is provided comprising instructions which, when the program is executed by a computer, cause the computer to carry out the method as described herein. The instructions may comprise any of the method steps and their variants as described herein. The computer program may be stored on a data storage medium, in particular a non-volatile data storage medium.

According to another aspect, a method for training a neural network comprising the following steps is provided:
- providing training data, wherein the training data comprise annotated images with annotations as input and unannotated images without annotations as training reference;
- training the neural network with the training data.

The training data may be taken from an available data base of image data. Additionally and/or alternatively, the training data may be created specifically for the purpose of training the neural network. Preferably, the annotated images may be annotated medical images. The method for training a neural network may be used to train the trained neural network that is applied in the method for curating annotated images.

According to an embodiment, the training data comprise a set of images pairs, each pair consisting of an annotated image with annotations as input and the identical but unannotated image without annotations as training reference. Advantageously this method of training may provide a very efficient way of training the neural network, if corresponding training data, i.e., image pairs, are available. The images of each pair preferably differ only with respect to the annotations. This embodiment may in particular be used for a U-Net based neural network. A stochastic gradient descent implementation may be used for training, e.g., similar to the disclosure of Ronneberger et al. in "U-Net: Convolutional Networks for Biomedical Image Segmentation" arXiv:1505.04597v1, 18 May 2015.

According to an embodiment, the training data comprise a set of annotated images with annotations as input and a set of unannotated images without annotations as training reference. This embodiment may preferably be used for training a Generative Adversarial Network (GAN), in particular a cycle-consistent Generative Adversarial Network (cycleGAN). The training may comprise two mappings, namely a first mapping from annotated image with annotations to unamended images without annotations and a second mapping from unamended images without annotations to annotated images with annotations. In particular, during training, two adversarial discriminators may be used, where the first discriminator aims to distinguish between input unannotated images and generated unannotated images generated via the first mapping and the second discriminator aims to distinguish between input annotated images and generated annotated images generated via the second mapping. Additionally a cycle consistency loss may be checked, wherein two mappings, in particular the second mapping following the first mapping as well as the first mapping following the second mapping, are checked to result in the original (input) annotated or unannotated image. The training may be carried out analogously as described in the state of the art with respect to cycleGANS, e.g., by Zhu et al. in "Unpaired Image-to-Image Translation using Cycle-Consistent Adversarial Networks", arXiv: 1703.10593v7, 24 Aug 2022. Advantageously, the training data does not need to comprise image pairs. Instead, it may advantageously be feasible that the training data only comprise unrelated images with and without annotations. Thus, this may be particularly beneficial, if no image pairs are available.

According to another aspect, a data processing system is provided, comprising a data interface and a processing unit, wherein the processing unit comprises a trained neural network that is trained to predict an amended image without annotations based on an annotated image, wherein the data interface is configured to receive images and direct the received images to the processing unit, wherein the data processing system is in particular configured to carry out the method as described herein via the processing unit and the data interface. The data processing system may comprise a computer-readable storage medium, on which instructions to carry out the method as described herein are stored. The data processing system may be or may comprise, for example, a computer, such as a personal computer, a cloud computer or a server. Additionally and/or alternatively, the processing unit may be the processing unit of an imaging system. The processing unit may comprise an annotation removal block. The annotation removal block is in particular configured to remove at least one annotation, preferably all annotations, from an annotated image. In particular the annotation removal block may be configured to carry out the method step according to the step of applying a neural network of the method for curating annotated images described herein. Preferably, the annotation removal block may be configured to remove the at least one annotation at pixel level. The annotation removal block may comprise a neural network as described herein. The processing unit may further comprise an annotation extraction block. The annotation extraction block is in particular configured to automatically extract the at least one annotation from the annotated image, for example as described herein with respect to the method. Preferably, the annotation extraction block is configured to translate the at least one annotation to at least one extracted annotation, preferably in a defined standard format. The standard format may be corresponding to the standard format described with respect to the method for curating annotated images. The annotation extraction block may be configured to apply an optical character recognition algorithm to convert textual markers from the annotated image into a text item in a structured text format, in particular as described herein. Additionally or alternatively, in order to extract the at least one annotation, the annotation extraction block may be configured to subtract the amended image from the annotated image. The annotation extraction block may in particular be configured to use the difference from the subtraction to derive the at least one extracted annotation. The system may be configured to receive the annotated image via the data interface and/or provide the amended image via the data interface.

According to an embodiment, the data processing system further comprises a database, wherein the system is configured to store the output of the processing unit, in particular amended images without annotations and/or extracted annotations, to the database. The database may be remote to the other components of the data processing system and the processing unit may be connected to the remote database via the data interface and configured to provide the amended image to the remote database.

The features and advantages of different embodiments can be combined. The features and advantages of one aspect of the invention, e.g., the method, may be applied to the other aspects, e.g., computer program and the data processing system, and vice versa.

### BRIEF DESCRIPTION OF THE DRAWINGS

The invention shall now be illustrated by means of embodiments with reference to the attached drawings, in which:
Fig. 1 shows an example of an annotated image that may be curated by the inventive method;
Fig. 2 shows an annotated image with a non-textual marker;
Fig. 3 shows an amended image without the annotation corresponding to the annotated image of Fig. 2;
Fig. 4 illustrates the working principle of a method according to an embodiment of the invention;
Fig. 5 shows a larger view of the textual marker of the annotated image of FIG. 4 and the corresponding extracted annotation;
Fig. 6 shows a flow diagram representing a method for curating annotated images according to an embodiment of the invention;
Fig. 7 shows a flow diagram representing a method for curating annotated images according to another embodiment of the invention;
Fig. 8 shows, on the left, an annotated image with annotations, in the centre, a corresponding amended image generated by a method according to an embodiment of this invention, and, on the right, a subtracted image that is generated by subtracting the amended image from the annotated image according to an embodiment of the invention;
Fig. 9 shows a flow diagram representing a method for training a neural network according to an embodiment of the invention;
Fig. 10 shows a schematic representation of a data processing system according to an embodiment of the invention.

### DETAILED DESCRIPTION OF EMBODIMENTS

Throughout the figures, the same or corresponding features/elements of the various embodiments are designated with the same reference numbers.

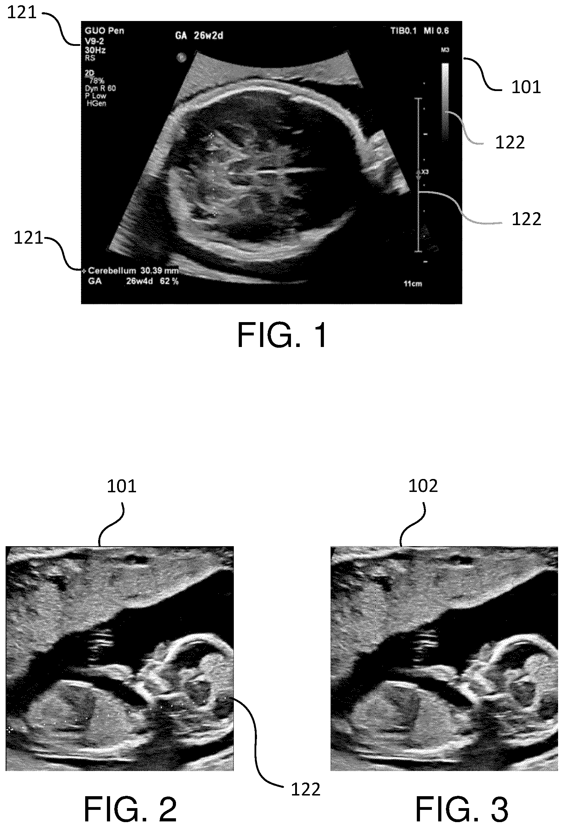

Fig. 1 shows an example of an annotated image 101 that may be curated by the inventive method. The annotated image 101 is a medical image, namely a B-mode ultrasound image of a foetal exam. Corresponding B-mode ultrasound images are also used in the following examples. However, the invention may be applied in a straightforward way to other ultrasound exams, such as cardiac exams, and to other variants of images, i.e., to general imaging. The annotations 121, 122 on the image 101 comprise several textual markers 121 and non-textual markers 122, such as scale markings and a colour scale. In order to use the annotated image 101 for training an algorithm, such as a neural network, it may be beneficial to provide such an annotated image 101 in amended form such that no annotations 121, 122 are present or that at least some of the annotations 121, 122 are removed.

Fig. 2 shows an annotated image 101 with a non-textual marker 122 in the form of a dotted line, while Fig. 3 shows a corresponding amended image 102 without the annotation. The amended image 102 has been created by applying a method according to an embodiment of the invention to the annotated image 101. As can be seen, the amended image 102 does not comprise the non-textual marker 122 anymore but is otherwise essentially identical to the annotated image 101.

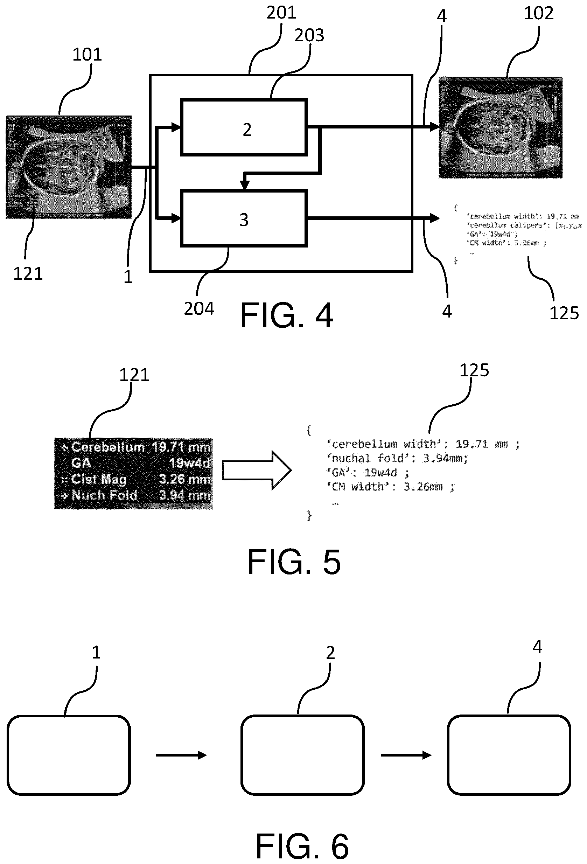

Fig. 4 illustrates the working principle of a method according to an embodiment of the invention. Therein, initially, an annotated image 101 having at least one annotation is received 1 from a processing unit 201 of a data processing system. The data processing unit 201 comprises an annotation removal block 203, where the at least one annotation is removed from the annotated image 101 via a trained neural network 211 and an amended image 102 is generated. Information of the amended image 102 may be used to extract 3 the at least one annotation from the annotated image 101 in an annotation extraction block 204 of the processing unit 201. In particular, the extraction may be achieved by subtracting the amended image 102 from the annotated image 101, thereby generating a difference that is representative for the at least one annotation. The amended image 102 is then provided 4, e.g., for further processing or for storing 5 in a database 202. Preferably, the extracted annotation 125, here extracted from a textual marker 121, may be provided 4 as well. Note, that in this embodiment, only the textual marker 121 comprising measurement information is removed 2 and extracted 3, while further annotations are still on the image. This may be preferable in some cases. In other applications, however, it may be preferable to remove all annotations of the annotated image 101.

Fig. 5 shows a larger view of the textual marker 121 of the annotated image 101 of Fig. 4 and the corresponding extracted annotation 125. The extracted annotation 125 is stored in a predefined standard format for representing the textual information. For extracting the extracted annotation 125, an optical character recognition algorithm has been applied, thereby generating the extracted annotation 125 in a digital standard format. The textual markers 121 may for example be converted by assessing the textual information contained in the textual markers 121. Note, that in this example, the standard format comprises English language. The text recognition algorithm of the annotation extraction block 204 may optionally be configured to recognize text in a plurality of different languages. In particular, text recognition algorithm may be configured to translate text from a recognized language into English when generating the extracted annotation 125. Further, the results of measurements are defined in quotation marks followed by a colon and then the measured value, e.g., in the SI units of mm. Separate measurements are divided by semicolons and line breaks. Also, the order of the results has been sorted according to a predefined standard.

Fig. 6 shows a flow diagram representing a method for curating annotated images 101 according to an embodiment of the invention. Therein, in a first step 1, an annotated image 101 having at least one annotation is received. The at least one annotation may comprise textual markers 121 and/or non-textual markers 122. Non-textual markers 122 may for example comprise a line, a combination of lines, or a geometric form. Additionally or alternatively the at least one annotation may include measurement data which have been obtained by measurements on the annotated image 101. For example, the measurement data may have been carried out by a medical professional, such as a physician or by technical staff of a hospital. In a further step 2, a trained neural network 211 is applied to the annotated image 121 and, thereby, an amended image 102 without the at least one annotation is generated. In a further step 4, the amended image 102 is provided.

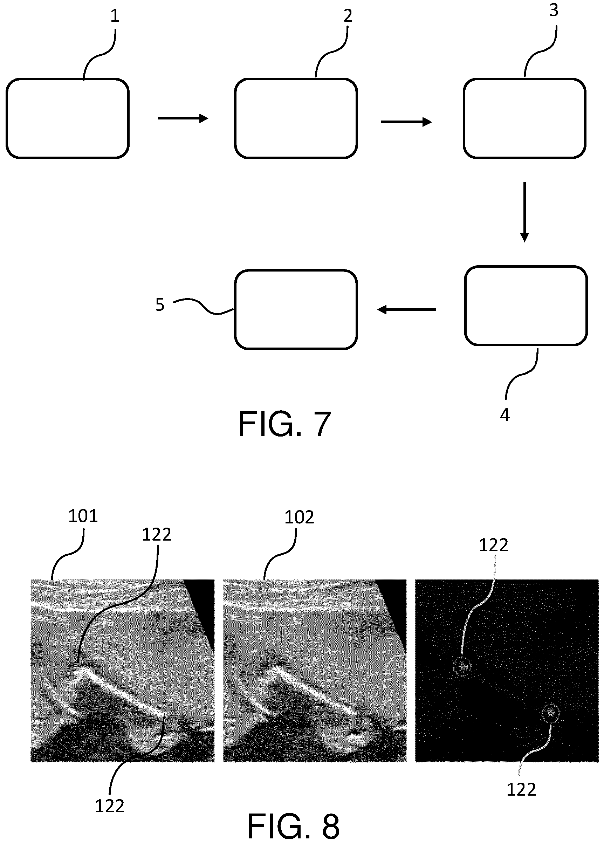

Fig. 7 shows a flow diagram representing a method for curating annotated images 101 according to another embodiment of the invention. The method may correspond to the method represented in Fig. 6 with respects to steps 1, 2, 4. I.e., the method comprises a step 1, where an annotated image 101 having at least one annotation is received, another step 2, where a trained neural network 211 is applied to the annotated image 121 in order to generate an amended image 102. In an additional step 3, the at least one annotation is extracted from the annotated image 101 to create at least one extracted annotation 125. The extracted annotation 125 may, for example, comprise information about the position, geometrical form, and/or orientation of the at least one annotation on the annotated image 101. Extraction may, for example, be carried out analogously as described with respect to Figs. 4 and 5. In a further step 4, the amended image 102 and the at least one extracted annotation 125 is provide. In particular the amended image 102 and the at least one extracted annotation 125 are added to a database 202 of training data, in the last step 5 that is show here.

Fig. 8 shows, on the left, an annotated image 101 with annotations in the form of non-textual markers 122 (here: crosses marking endpoints representing calipers) and in the centre, a corresponding amended image 102 generated by a method according to an embodiment of this invention, and. Hence, the amended 102 is predicted by the trained neural network 211. On the right of Fig. 8, a subtracted image 103 is shown that is generated by subtracting the amended image 102 from the annotated image 101. In the subtracted image 103, the textual markers 121 are clearly visible. Accordingly, the subtracted image 103 may be used as extracted annotation 125. Alternatively, the extracted annotation 125 may be further extracted from the subtracted image 103, e.g., by determining the characteristics and/or position of the non-textual markers 122 and storing them in a (e.g., digital) standard format. Advantageously, extracting the non-textual markers 122 from the subtracted image 103 may be easier and more reliable, since the annotations are more distinct from the now uniformly black background. Determining the characteristics and/or position of the non-textual markers 122 may, for example be achieved with a template matching step, such as a template searching for crosses in this example. Additionally, the extraction of textual markers 121 may also be easier and more reliable when using the subtracted image 103.

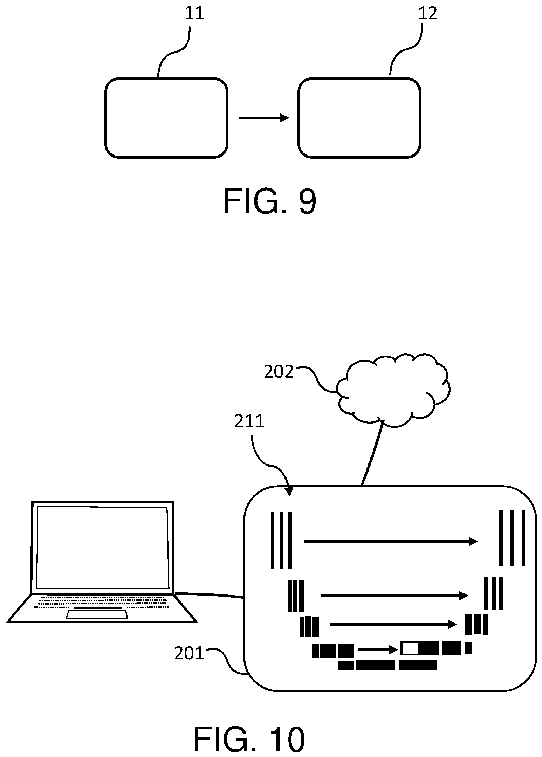

Fig. 9 shows a flow diagram representing a method for training a neural network according to an embodiment of the invention. In a first step 11, training data are provided. The training data comprise annotated images 101 with annotations as input and unannotated images without annotations as training reference. In a following step 12, the neural network is trained with the training data. According to a particular embodiment, the training data may comprise a set of images pairs, each pair consisting of an annotated image with annotations as input and the identical but unannotated image without annotations as training reference. This set of image pairs may preferably used to train a neural network, in particular a U-Net based neural network, in a fully supervised fashion. Alternatively, according to another particular embodiment, the training data may comprise a set of annotated images 101 with annotations as input and a set of unannotated images without annotations as training reference. Hence the training data are not paired in this particular embodiment. These separate sets of training data may in particular be applied to train a cycleGANs-type neural network.

Fig. 10 shows a schematic representation of a data processing system according to an embodiment of the invention. The data processing system comprises a data interface 205 and a processing unit 201. The processing unit 201 comprises a trained neural network 211 that is trained to predict an amended image 102 without annotations based on an annotated image 101. The trained neural network 211 may, according to a preferred embodiment, be a convolutional neural network trained in a fully supervised fashion. In particular preferably, the trained neural network 211 may be a U-Net based convolutional network. According to another preferred embodiment, the trained neural network 211 may be trained based on Generative Adversarial Networks, preferably cycle-consistent Generative Adversarial Networks. The data interface 205 is configured to receive images and direct the received images to the processing unit 201. The data processing system is in particular configured to carry out the method as described herein. I.e., the processing unit 201 is configured to apply the trained neural network 211 to an annotated image 101 that is provided to the processing unit 201. The data processing system is further configured to store the output of the processing unit 201, namely amended images 102 and, optionally, extracted annotations 125, to a database 202. The database 202 may be part of the data processing system or the database 202 may be an external database.

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS

- 1-5: method steps
- 11-12: method steps
- 101: annotated image
- 102: amended image
- 103: subtracted image
- 121: textual markers
- 122: non-textual markers
- 125: extracted annotation
- 201: processing unit
- 202: database
- 203: annotation removal block
- 204: annotation extraction block
- 205: data interface
- 211: trained neural network

## Claims

1. A computer-implemented method for curating annotated images (101), comprising the following steps:
(a) receiving an annotated image (101) having at least one annotation;
(b) applying a trained neural network (211) to the annotated image (101) and thereby generating an amended image (102) without the at least one annotation;
(c) providing the amended image (102).

2. The method according to any one of the preceding claims,
wherein the at least one annotation comprises at least one textual marker (121) and/or at least one non-textual marker (122), such as a line, a combination of lines, or a geometric form.

3. The method according to any one of the preceding claims,
wherein the at least one annotation includes measurement data which have been obtained by measurements on the annotated image (101), in particular manual measurements by a user.

4. The method according to any one of the preceding claims,
wherein the trained neural network (211) is a convolutional neural network trained in a fully supervised fashion, in particular a U-Net based convolutional network.

5. The method according to any one of the preceding claims,
wherein the trained neural network (211) is trained based on Generative Adversarial Networks, preferably cycle-consistent Generative Adversarial Networks.

6. The method according to any one of the preceding claims, further comprising the following step:
(d) extracting the at least one annotation from the annotated image (101) to create at least one extracted annotation (125),
wherein optionally the extracted annotation (125) comprises information about the position, geometrical form, and/or orientation of the at least one annotation on the annotated image (101).

7. The method according to claim 6,
wherein extracting the at least one annotation comprises subtracting the amended image (102) from the annotated image (101), the at least one extracted annotation (125) being derived from the difference.

8. The method according to claim 6 or 7,
wherein extracting the at least one annotation comprises applying an optical character recognition algorithm to convert textual markers (121) from the annotated image (101) into a text item in a structured text format.

9. The method according to claim 8,
wherein converting the textual markers (121) comprises assessing the textual information contained in the textual marker and wherein the structured text format is a predefined standard format for representing the textual information,
wherein the text recognition algorithm is optionally configured to recognize text in a plurality of different languages.

10. The method according to any one of the preceding claims, further comprising the following step:
(e) Adding the amended image (102), optionally together with the at least one extracted annotation (125), to a database (202) of training data.

11. A computer program comprising instructions which, when the program is executed by a computer, cause the computer to carry out the method according to any one of the preceding claims.

12. A method for training a neural network comprising the following steps:
- providing training data, wherein the training data comprise annotated images (101) with annotations as input and unannotated images without annotations as training reference;
- training the neural network with the training data.

13. A method for training a neural network according to claim 12,
wherein the training data comprise a set of images pairs, each pair consisting of an annotated image (101) with annotations as input and the identical but unannotated image without annotations as training reference.

14. A data processing system, comprising a data interface (205) and a processing unit (201),
wherein the processing unit (201) comprises a trained neural network (211) that is trained to predict an amended image (102) without annotations based on an annotated image (101),
wherein the data interface (205) is configured to receive images and direct the received images to the processing unit (201),
wherein the data processing system is in particular configured to carry out the method according to any one of the claims 1 to 11 via the processing unit (201) and the data interface (205).

15. The data processing system according to claim 14, further comprising a database (202),
wherein the system is configured to store the output of the processing unit (201), in particular amended images (102) without annotations and/or extracted annotations (125), to the database (202).
